Europäisches Patentamt

European Patent Office

Office européen des brevets

(19)

(11) Veröffentlichungsnummer: **0 427 986 A1**

# (12) EUROPÄISCHE PATENTANMELDUNG

(21) Anmeldenummer: 90120503.9

(22) Anmeldetag: 25.10.90

(51) Int. Cl.⁵: **F16L 37/00**, F04D 29/40

(30) Priorität: 14.11.89 CH 4092/89

(43) Veröffentlichungstag der Anmeldung:
22.05.91 Patentblatt 91/21

(84) Benannte Vertragsstaaten:
AT BE CH DE DK ES FR GB GR IT LI LU NL SE

(71) Anmelder: RIWISA AG KUNSTSTOFFWERKE
Dottikerstrasse 8
CH-5607 Hägglingen(CH)

(72) Erfinder: **Huber, Roland**
**Eichhofstrasse 9**
**CH-5604 Hendschiken(CH)**

(74) Vertreter: **EGLI-EUROPEAN PATENT
ATTORNEYS**
**Horneggstrasse 4**
**CH-8008 Zürich(CH)**

(54) **Pumpe zur Förderung fliessfähiger Medien.**

(57) Die Pumpe weist ein, ein Pumpenrad umgebendes Pumpengehäuse (2) mit zwei als Rohrstutzen (5) ausgebildeten Leitungsanschlüssen auf. Auf den Rohrstutzen (5) sind verschiebbar angeordnete Kupplungshülsen (8) aufgeschoben, welche als Kugelgelenk oder als einteiliger Kupplungsring ausgebildet sind. Die Kupplungshülse (8) ist mit gegen das Pumpengehäuse (2) gerichtete, mit Haken (24) versehenen Haltefingern (23) ausgerüstet, welche unter Einhaltung eines Axialspiels (a) mit einem an dem Rohrstutzen (5) angeformten Halteflansch (25) zusammenwirken. Durch die Verschiebbarkeit der Kupplungshülse (8) gegenüber dem Rohrstutzen (5) des Pumpengehäuses wird die Ueberleitung von zusätzlichen Beanspruchungen auf das Pumpengehäuse (2) vermieden. Deshalb ist es möglich, das Pumpengehäuse und die Kupplungshülse (8) mindestens teilweise aus Kunststoff zu fertigen.

Fig. 1

EP 0 427 986 A1

# PUMPE ZUR FÖRDERUNG FLIESSFÄHIGER MEDIEN

Die Erfindung betrifft eine Pumpe zur Förderung fliessfähiger Medien in ein Leitungssystem mit einem von einem Pumpengehäuse umgebenen Pumpenrad, dessen Pumpenwelle von einem Antriebsmotor antreibbar ist, wobei das Pumpengehäuse mit zwei Leitungsanschlüssen zum Anschliessen an eine Saugleitung und eine Druckleitung versehen ist, welche Anschlüsse voneinander abgewandt sind, jedoch annähernd fluchtend gegenüberliegen und als ein zur Aufnahme einer Rohrkupplung dienender, von dem Gehäuse abragender Rohrstutzen ausgebildet sind.

Die Erfindung betrifft das Gebiet der Förderung von fliessfähigen Medien, wie sie in vielen Anwendungsgebieten verwendet werden. Ein grosses Anwendungsgebiet sind die Flüssigkeits- und -kühlsysteme, bei denen eine Pumpe das erwärmte Wasser in ein Leitungssystem fördert, an welchem die Heizkörper angeschlossen sind. Das ganze Leitungssystem wird hierbei im wesentlichen von einer einzigen Pumpe oder mehreren Pumpen beaufschlagt.

Bei den Pumpen handelt es sich im wesentlichen um Pumpeneinheiten, d.h. um eine Einheit, bei welcher die Pumpe und der Antriebsmotor zusammengebaut sind, wobei das Pumpengehäuse unmittelbar mit dem Motorgehäuse verbunden und das Pumpenrad direkt auf der Welle des Antriebsmotors fest aufgesetzt ist.

Das Pumpengehäuse weist zwei Leitungsanschlüsse auf, von welchen der eine Leitungsanschluss zum Anschliessen an eine Saugleitung und der andere Anschluss zum Anschliessen an eine Druckleitung vorgesehen ist. Die einfachste Lösung stellt hierbei der Einbau der Pumpe in eine gerade Leitung, beispielsweise in die Steigleitung eines Heizungssystems, dar, weshalb die beiden Leitungsanschlüsse voneinander abgewandt sind, jedoch im Hinblick auf den Einbau in eine gerade Leitung praktisch miteinander fluchtend gegenüberliegen.

Zum Anschliessen der Pumpe an die erwähnte Leitung werden Rohrkupplungen verwendet, mit denen die Leitungsanschlüsse mit dem entsprechenden Leitungsteil zusammengeschraubt werden. Rohrkupplungen sind in grosser Anzahl bekannt. Eine bekannte Ausführungsform stellt die Klemmringkupplung dar, mit welcher gleichzeitig auch eine Abdichtung des Leitungsanschlusses erreicht wird.

Damit eine solche Rohrkupplung verwendet werden kann, ist es erforderlich, die am Pumpengehäuse vorzusehenden Leitungsanschlüsse als gerade Rohrstutzen auszubilden. Auf diesem Rohrstutzen wird dann eine Ueberwurfmutter und der Klemmring aufgeschoben und mit einem am andern Leitungsende aufgeschraubten Gewindestück verschraubt.

Damit eine saubere Verbindung mit solchen Rohrkupplungen erreicht wird, sollten der Rohrstutzen und das Leitungsende möglichst genau ausgerichtet sein, was in der Praxis jedoch nur angenähert erreicht wird. Bei der Montage der Rohrkupplungen ist es deshalb nicht zu vermeiden, dass im Pumpengehäuse Spannungen entstehen. Aus diesem Grunde werden die Pumpengehäuse im allgemeinen aus Metall gefertigt.

Im Hinblick auf eine Kostensenkung und zum Erreichen geringerer Transportgewichte für die Pumpeneinheiten wäre es erwünscht, möglichst viele Teile aus Kunststoff herzustellen, beispielsweise das Pumpengehäuse. Im Hinblick auf die dabei auftretenden Spannungen ist jedoch zu befürchten, dass die Pumpengehäuse die auftretenden Beanspruchungen nicht aushalten und deshalb Defekte entstehen können.

Hier setzt die Erfindung ein, der die Aufgabe zugrunde liegt, eine Pumpe der eingangs beschriebenen Art so weiter auszugestalten, dass bei der in das Leitungssystem montierten Pumpeneinheit keine zusätzlichen Beanspruchungen eingeleitet werden können, so dass das Pumpengehäuse unbedenklich auch aus Kunststoff hergestellt werden kann.

Diese Aufgabe wird gemäss der Erfindung dadurch gelöst, dass auf den beiden Rohrstutzen eine verschiebbare Kupplungshülse gelagert ist, welche pumpengehäuseseitig mit mindestens einem elastisch aufweitbaren Haltefinger versehen ist, welcher an seinem freien Ende einen zur Oberfläche des Rohrstutzens hin gerichteten Haken aufweist, der an einem, am Aussenumfang des Rohrstutzens abragenden Halteflansch mit Axialspiel einzuhalten bestimmt ist. Dadurch, dass zwischen den Haken der Haltefinger und dem am Rohrstutzen angeordneten Halteflansch ein Axialspiel besteht, können vom Leitungssystem keine Beanspruchungen über die Kupplungshülse auf das Pumpengehäuse übertragen werden.

Zweckmässig entspricht hierbei das Axialspiel der an den beiden Rohrstutzen verschiebbar angeordneten Kupplungshülsen gegenüber dem Pumpengehäuse der Differenz des Abstandes der auf den beiden Rohrstutzen angebrachten Halteflanschen und des Abstandes der Haken der beiden Kupplungshülsen. Dadurch wird erreicht, dass bei in der Mitte zwischen den beiden Kupplungshülsen angeordneten Pumpengehäuse beidseits ein Axialspiel zur Verfügung steht, und bei einseitig gegenüber den Kupplungshülsen verschobenem Pumpengehäuse das Axialspiel durch die an dem einen Halteflansch anstehenden Haken begrenzt ist.

Ein Ausführungsbeispiel der Erfindung ist in der Zeichnung dargestellt und nachfolgend beschrieben. Es zeigen:

Fig. 1 eine schematisch dargestellte Seitenansicht, teilweise im Schnitt, einer aus einer Pumpe und einem Antriebsmotor zusammengesetzten Pumpeneinheit zur Förderung fliessfähiger Medien, wobei auf die Rohrstutzen eine axial verschiebbare und allseitig schwenkbare Kupplungshülse aufgesetzt ist,

Fig.2 den schematisch dargestellten Schnitt des einen Rohrstutzens des Pumpengehäuses mit der Kupplungshülse, wobei die Kupplungshülse gegenüber der Achse des Rohrstutzens geneigt ist, und

Fig. 3 eine schematisch dargestellte Draufsicht einer Kupplungshülse, von der eine umfangseitig angeordnete, ebene Fläche mit einem, am Pumpengehäuse vorstehenden Sicherungssteg eine Verdrehsicherung der Pumpeneinheit gegenüber den Kupplungshülsen bildet.

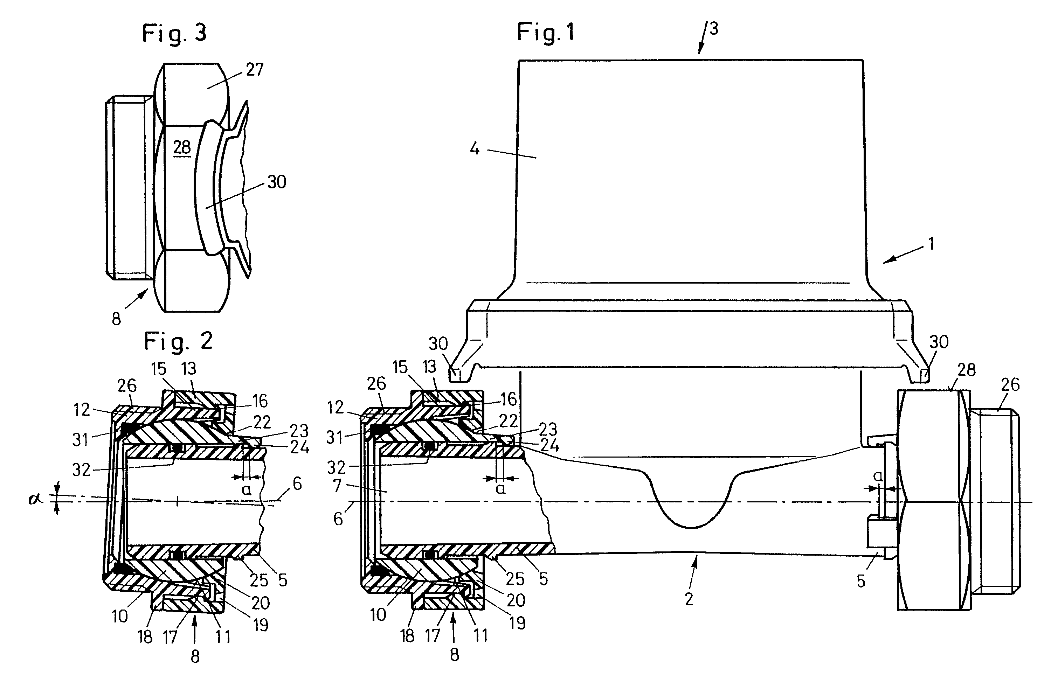

Die in Fig. 1 dargestellte Pumpeneinheit 1 setzt sich aus einem Pumpengehäuse 2 mit einem in demselben angeordneten Pumpenrad (nicht sichtbar) und einem Antriebsmotor 3 zusammen, dessen Motorgehäuse 4 mit dem Pumpengehäuse 2 fest verbunden ist. Am Pumpengehäuse sind zwei gegenüberliegende Rohrstutzen 5 angeordnet, deren Rohrachse 6 fluchtet und deren Mündung 7 voneinander abgewandt ist.

Die vom Pumpengehäuse 2 abragenden Rohrstutzen 5 weisen eine solche Länge auf, dass darauf eine mit 8 bezeichnete Kupplungshülse aufgeschoben werden kann. Die Kupplungshülse 8 setzt sich bei der Ausführung nach Fig. 1 und 2 aus im wesentlichen drei Teilen zusammen, nämlich einer Innenhülse 10, welche eine kugelige Aussenfläche 11 aufweist, einem Gewindering 12 und einem Gegenring 13. Der Gewindering 12 und der Gegenring 13 umfassen die kugelige Aussenfläche 11 der Innenhülse 10 annähernd spielfrei und können gegenüber der Innenhülse 10 allseits geschwenkt werden.

Das Schwenken des Gewinderinges 12 und des Gegenringes 13 ermöglicht die Ueberbrückung von Fluchtungsfehlern beim Uebergang der Mündung 7 des Rohrstutzens 5 auf ein Leitungsende. Die Verbindung des Gewinderinges 12 mit dem Leitungsende (nicht dargestellt) erfolgt über einen auf dem Leitungsende aufgesetzten Gewindestutzen, der über einen metallischen, mit Gewinde versehenen Zwischenring (nicht dargestellt) mit dem Gewindering 12 der Kupplungshülse 8 fest verbunden ist. Durch den Zwischenring lässt sich die Kupplungshülse gegenüber dem Rohrstutzen axial einstellen.

Der Gewindering 12 weist gegen das Pumpengehäuse 2 gerichtete Haltefinger 15 mit nach aussen gerichteten Haken 16 auf. Die Haken 16 haken sich an einem auf der Innenseite des Gegenringes 13 angeordneten Halteflasch 17 ein und halten dadurch den Gegenring 13 fest, der sich an einem Aussenflansch 18 des Gewinderinges 12 abstützt.

Der Gegenring 13 weist einen innenliegenden Stützflansch 20 auf, der an der kugeligen Aussenfläche 11 der Innenhülse 10 anliegt und damit zur spielfreien Verbindung zwischen dem Gewindering 12 und dem Gegenring 13 einerseits und der Innenhülse andererseits beiträgt. Der Stützflansch 20 weist am Uebergang zum Gegenring 13 einige Durchbrechungen 19 auf. Zudem weist der Stützflansch 20 an seinem Innenrand Ausnehmungen 22 auf, durch welche sich mit der Innenhülse 10 verbundene Haltefinger 23 mit nach einwärts gerichteten Haken 24 erstrecken. Die Haken 24 wirken mit einem am Aussenumfang des Rohrstutzens 5 angeformten Halteflansch 25 zusammen, weisen jedoch im Gegensatz zu den Haken 16 des Gewinderinges 12 und dem Halteflansch 17 des Gegenringes 13 axiales Spiel a auf. Am gegenüberliegenden Rohrstutzen 5 wird dasselbe Spiel a vorgesehen, so dass zwischen der Kupplungshülse 8, die über das Gewinde 26 mit dem Leitungsende verbunden sind, und dem Pumpengehäuse ein gesamtes Axialspiel von 2a vorhanden ist. In einer der Extremlagen bildet der Haken 24 mit dem Halteflansch 25 einen die Verschiebung des Pumpengehäuses 2 begrenzenden Anschlag.

Aus Fig. 2 ist ersichtlich, dass eine Schwenkung zwischen der Innenhülse 10 und dem Gewindering 12 mit dem Gegenring 13 möglich ist. Dieser Winkel kann etwa maximal 4 - 6° betragen.

Wie aus Fig. 3 ersichtlich ist, ist der Gegenring 13 an seinem Aussenumfang als Sechskant 27 ausgebildet, damit die Kupplungshülse 8 mit einem Schlüssel festgehalten werden kann. Es ist aber auch möglich, nur eine einzige Fläche 28 vorzusehen, die mit geringem Abstand von einem Sicherungssteg 30 angeordnet ist. Dadurch wird verhindert, dass das Pumpengehäuse 2 mit dem Antriebsmotor 3 um die Rohrachse 6 kippen kann, da die Fläche 28 an dem sicheren Steg 30 anschlägt. Aber auch der Sechskant 27 kann in gleicher Weise der Verdrehsicherung dienen.

Zwischen der Innenhülse 10 und dem Rohrstutzen 5 sowie zwischen dem Gewindering 12 und der Innenhülse 10 angeordnete Weichdichtungsringe 31, 32 gewährleisten eine tropfdichte Abdichtung der Kupplungshülse 8.

Will man auf die Schwenkbarkeit der Kupplungshülse 8 verzichten, kann die Kupplungshülse 8 aus einem einzigen Stück gefertigt sein, das auf den Rohrstutzen 5 aufgeschoben wird und an seinem gegen das Pumpengehäuse 2 gerichteten

5     **EP 0 427 986 A1**     6

Ende die Haltefinger 23 mit den Haken 24 aufweist. An der gegenüberliegenden Seite wird das Aussengewinde 26 in gleicher Weise wie beim Gewindering 12 vorgesehen.

Durch die Verschiebbarkeit der Kupplungshülse 8 und dem zwischen dem Halteflansch 25 und den Haken 24 vorgesehenen Axialspiel a können zusätzliche Beanspruchungen des Pumpengehäuses 2 zuverlässig vermieden werden. Dadurch wird erreicht, dass das Pumpengehäuse und auch Teile der Kupplungshülse 8 aus Kunststoff hergestellt werden können, wodurch die Kosten der Pumpeneinheit und Transportkosten gesenkt werden können.

**Ansprüche**

1. Pumpe zur Förderung fliessfähiger Medien in ein Leitungssystem mit einem von einem Pumpengehäuse (2) umgebenen Pumpenrad, dessen Pumpenwelle von einem Antriebsmotor (3) antreibbar ist, wobei das Pumpengehäuse mit zwei Leitungsanschlüssen zum Anschliessen an eine Saugleitung und eine Druckleitung versehen ist, welche Anschlüsse voneinander abgewandt sind, jedoch im wesentlichen fluchtend gegenüberliegen und als ein zur Aufnahme einer Rohrkupplung dienenden, von dem Pumpengehäuse abragender Rohrstutzen (5) ausgebildet sind, dadurch gekennzeichnet, dass auf den beiden Rohrstutzen (5) eine verschiebbare Kupplungshülse (8) gelagert ist, welche pumpengehäuseseitig mit mindestens einem elastisch verformbaren Haltefinger (23) versehen ist, welcher an seinem freien Ende einen zur Oberfläche des Rohrstutzens hin gerichteten Haken (24) aufweist, der an einem, am Aussenumfang des Rohrstutzens abragenden Halteflansch (25) mit Axialspiel (a) einzuhaken bestimmt ist.

2. Pumpe nach Anspruch 1, dadurch gekennzeichnet, dass das gesamte Axialspiel (2a) der an den beiden Rohrstutzen aufgeschobenen Kupplungshülsen (8) gegenüber dem Pumpengehäuse (2) der Differenz des Abstandes der auf den beiden Rohrstutzen (5) angebrachten Halteflanschen (25) und des Abstandes der beiden Haken (24) der Kupplungshülsen entspricht.

3. Pumpe nach Anspruch 1, dadurch gekennzeichnet, dass eine der Kupplungshülsen (8) mit einer zur Achse (6) der Rohrstutzen (5) exzentrischen Anschlagfläche (28) versehen ist, welche in den Bereich eines über den Rohrstutzen an dem Pumpengehäuse (2) angeformten Sicherungssteges (30) zur Verdrehsicherung des Pumpengehäuses gegenüber der Kupplungshülse ragt.

4. Pumpe nach Anspruch 1, dadurch gekennzeichnet, dass die Kupplungshülse (8) als Schwenkkupplung ausgebildet ist, mit welcher Fluchtungsfehler zwischen einem der Rohrstutzen (5) des Pumpengehäuses (2) einerseits und der Saugleitung oder der Druckleitung andererseits überbrückbar sind.

5. Pumpe nach Anspruch 4, dadurch gekennzeichnet, dass die Kupplungshülse (8) eine Innenhülse (10) mit einer kugeligen Aussenfläche (11) aufweist, welche von einem, dem Anschluss an die Saugleitung oder die Druckleitung dienenden Gewindering (12) und einem, mit dem Gewindering verbundenen Gegenring (13) umfasst ist.

6. Pumpe nach Anspruch 5, dadurch gekennzeichnet, dass der Gegenring (13) einen innenliegenden, sich auf der Kugelfläche (11) der Innenhülse (10) abstützenden Stützflansch (20) aufweist, welcher Ausnehmungen (22) für den Durchtritt der mit der Innenhülse (10) verbundenen Haltefinger (23) aufweist.

7. Pumpe nach Anspruch 5, dadurch gekennzeichnet, dass der Gewindering (12) und der Gegenring (13) durch mit Haken (16) versehene Haltefinger (15) und einem Halteflansch (17) miteinander verbunden sind.

8. Pumpe nach Anspruch 1, dadurch gekennzeichnet, dass das Pumpengehäuse (2) und die Kupplungshülse (8) bzw. die Teile derselben, aus Kunststoff geformt sind, wobei zur Verbindung der Kupplungshülse (8) mit den benachbarten Leitungsenden ein metallischer Ring auf dem Aussengewinde (26) des Gewinderinges (12) aufgeschraubt ist.

Fig.1

Fig. 2

Fig. 3

Europäisches
Patentamt

EUROPÄISCHER
RECHERCHENBERICHT

Nummer der Anmeldung

EP 90 12 0503

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 066 399 (SATO)<br>* das ganze Dokument * <br>- - - | 1,2,4,5 | F 16 L<br>37/00<br>F 04 D 29/40 |
| A | FR-A-1 434 748 (CALOTECH EST.)<br>* das ganze Dokument *<br>- - - | 1,2 | |
| A | FR-A-2 315 022 (VINCHES)<br>* Seite 1, Zeile 21 - Seite 3, Zeile 8; Figur 1 *<br>- - - | 1 | |
| A | US-A-3 938 833 (TADASHI MIYAOKA)<br>* Spalte 2, Zeile 37 - Spalte 3, Zeile 57; Figuren 1, 2 *<br>- - - | 1,4 | |
| A | DE-A-2 414 926 (SLJUSAR)<br>* Seite 44, Absatz 2 - Seite 46, Absatz 1; Figuren 20, 21 *<br>- - - - - | 1,4 | |

| | RECHERCHIERTE SACHGEBIETE (Int. Cl.5) |
|---|---|
| | F 16 L<br>F 04 B<br>F 04 D |

Der vorliegende Recherchenbericht wurde für alle Patentansprüche erstellt

| Recherchenort | Abschlußdatum der Recherche | Prüfer |
|---|---|---|
| Den Haag | 07 Dezember 90 | VON ARX H.P. |